# EUROPEAN PATENT SPECIFICATION

(11) **EP 1 469 368 B1**
(45) Date of publication and mention of the grant of the patent: **28.05.2008**
(21) Application number: 03008751.4
(22) Date of filing: 17.04.2003
(51) Int. Cl.: G06F 1/00, G07C 9/00

(54) **Security method and system with cross-checking based on geographic location data**
Sicherheitsmethode und System mit Überkreuzprüfung basierend auf geographischen Ortsdaten
Système et méthode de sécurisation basés sur une comparaison de données de localisations géographiques

(43) Date of publication of application: 20.10.2004
(73) Proprietor: Marshfield LLC, Wilmington, DE (US)
(72) Inventor: De Petris, Luciano, 20149 Milano (IT)
(74) Representative: Modiano, Micaela Nadia

(56) References cited:
- EP-A- 1 288 765
- WO-A-01/99378
- WO-A-99/50734
- US-A1- 2002 070 273

## Description

The present invention is in the field of user identification and authentication services with reference to sensitive operations, i.e., operations that require verification of the identity of a user as a critical factor in the context of an action to be performed, for example a credit card transaction, the reporting of a danger warning signal regarding a highway accident, or the deactivation of an alarm system.

The continuing technological development and diffusion of low-cost data communications tools has changed radically the way in which people act in many application contexts, particularly with reference to operations for trading tangible and intangible property and financial operations but also in all cases that simply require greater assurance of the identity of a user involved in a given action.

A significant example is given by debit and credit cards, which are very widespread trading tools whose success is due mainly to their convenience with respect to the traditional use of cash. It is in fact certainly more practical and convenient to carry in one's wallet a simple plastic card instead of several layers, of bills of various denominations, thus simplifying not only large payments, which as such are rarely made in cash, but also generic monetary transactions related to everyday purchases. The use of credit cards spares the user from having to count the sum of money required to cover the cost of the purchase and from having to check any associated change. Having ascertained the practicality of such a mechanism and by taking advantage of the diffusion of the new data communications circuits, many banks are now offering, alongside what can be considered as conventional credit cards (Visa, MasterCard, American Express), personal debit cards, which can use alternative circuits that are cheaper for the user to make purchases in an ever greater number of participating points of sale. By using debit cards of the "bank-issued" type, the user performs, directly in the shop where he is making the purchase, the equivalent of a cash withdrawal at an ATM (automatic teller machine, such as the cash dispensers known in Italian as Bancomat), in which the entered amount is not paid in cash to the user but is deposited directly into the current account of the retailer. The practicality of these debit cards is even greater than that of conventional credit cards, since there is no risk of signature forgeries in case of theft or loss of the card, because the monetary transaction is activated by the user by entering a secret PIN (personal identification number).

However, even this solution is not entirely ideal and still has considerable drawbacks. In particular, both in the case of credit cards and in the case of debit cards it is virtually impossible to verify assuredly that the card bearer is actually the owner authorized to use said card and is not an impostor. Loss or theft of the credit card or debit card and of its PIN, which is often recklessly kept together with the card, exposes the user to great risks of substantial financial losses, since the card gives anyone, albeit unlawfully, free access to the current account of the owner. Although many methods and procedures for improving safety in transactions that require an exact certification of the identity of the bearer of a card have been studied, a satisfactory solution that allows users to act in the customary manner but with the assurance of greater safety has not yet been found.

The same remarks apply in other fields, for example in relation to the reporting of dangerous situations on a highway, such as road accidents, the forming of fog banks, roadworks, and so forth, which are very frequent especially in the winter period. In such cases, very often the initial condition is not particularly severe but due to high highway speeds and to the number of vehicles that approach the critical location it is not uncommon to be faced with catastrophic situations, with high risks of loss of human life. Current information systems in fact do not allow to warn promptly and in a targeted manner people who are traveling in the same direction and at a critical distance from the point where the dangerous condition occurs.

Another reference sector affected by similar problems of security and certification of the location of a user is the sector of alarm systems. An alarm system is in fact typically deactivated by operating on a suitable remote control or by operating on a control panel with a key or by entering a secret code. However, it is evident that there is no assurance that the operator who has operated the deactivation control is actually a person who is authorized to do so. Since it is obviously neither practical not possible to resort, in conventional use, to sophisticated and expensive recognition systems based on specific physical characteristics of the authorized person, such as a retinal scan or fingerprint verification, every conventional alarm system can be deactivated immediately by the hostile person who has gained possession of the secret code or of the device that deactivates the alarm.

US 2002/0070273 A1 discloses an authentication system comprising an authentication unit of a card company which is able to compare the position of a card reader with the position of the cellular telephone of the card's user. The position of the cellular telephone is obtained by the authentication unit from the enterprise of the cellular telephone.

US 2002/0108062 A1 discloses an authentication system comprising a location matching server comprising a location registration database and a shop database. In particular, the location matching server receives user ID data and shop ID data from a credit server, searches for the user's mobile phone ID in a location registration database, obtains from the location registration database the ID of the base station which forms the radio cell where the mobile phone exists, compares the base station ID obtained from the location registration database to the base station ID obtained from the shop database, and finally transmits the outcome of the comparison to the credit server.

The aim of the present invention is to overcome the problems noted above, providing a system and a method that allow to obtain greater assurances in identifying and authenticating users involved in actions that require a high degree of security.

Within this aim, an object of the present invention is to perform a cross-check of the identity of the user by utilizing devices that are already available to the average user, particularly the mobile telephone, so as to avoid the need to use additional dedicated devices.

Another object of the present invention is to increase the degree of security during sensitive operations in a manner that is transparent to the user, i.e., without the user being required to perform actions that are different from those that he would have performed normally during a sensitive action.

This aim and these and other objects that will become better apparent hereinafter are achieved by the system of claim 1.

This aim and these and other objects are also achieved by the method of claim 8.

Advantageously, the device further comprises means for sending the result or data generated or determined as a function thereof to the service provider, to the mobile telephone number, or to a series of mobile telephone numbers stored in a temporary or permanent table at the certifying body.

The data communications networks used to transmit the various data can be any, particularly credit card circuit networks, debit card circuit networks, fixed and mobile telephone networks, Internet and Intranet networks, highway data communications networks, private or proprietary networks, optionally provided with the suitable gateways for transit from one network to another as known in the background art.

Conveniently, more than one mobile telephone number can be transmitted by the service supplier and used for comparison between the geographic location of the point of access to the service in use and the geographic location of the mobile telephone that corresponds to one of the mobile telephone numbers.

Advantageously, the comparison means can be implemented by means of a computer program and can use various comparison criteria, applying different tolerance margins or computing methods depending on the service that the user is accessing and/or on the telephone carrier involved in verifying the position of the mobile telephone of the user.

Further characteristics and advantages of the invention will become better apparent from the following detailed description, given by way of nonlimitative example and accompanied by the corresponding figures, wherein:
Figure 1 is a schematic view of the elements that interact with the system according to the invention;
Figure 2 is a schematic view of an embodiment of the system according to the present invention;
Figure 3 is a flowchart according to the inventive method on which the present invention is based;
Figure 4 is a schematic view of the elements that interact with the system according to the present invention in the context of an embodiment related to the use of credit cards;
Figure 5 is a schematic view of the elements that interact with the system according to the present invention in the context of an embodiment related to use for reporting dangers in a highway context;
Figure 6 is a schematic view of an auxiliary device that can be used in an embodiment of the method for checking the position of a user, applied along a highway network.

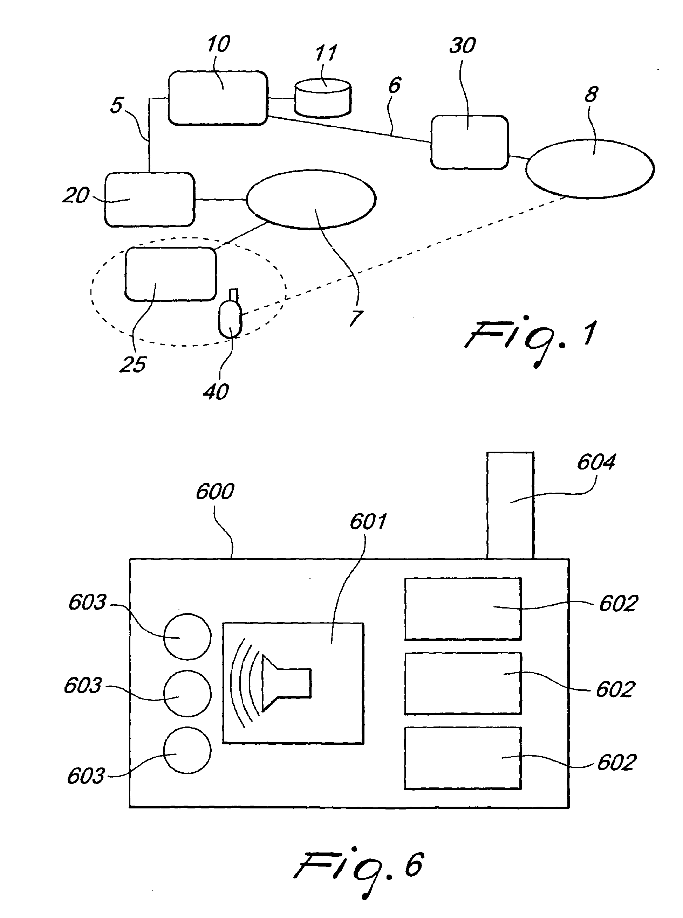

Figure 1 is a schematic view of the basic elements involved in a general application of the system and of the method according to the invention. In particular, Figure 1 illustrates a centralized server 10 operated by a management company, hereinafter referenced as the certifier, which is connected to a database 11 and is linked to a first data communications network 5 and to a second data communications network 6.

The first data communications network 5 is used to connect the certifier 10 to a service provider 20, which is in turn connected to a third data communications network 7.

The second data communications network 6 is used to connect the certifier 10 to the server of a mobile telephone carrier 30, which has access to a mobile telephone network 8.

The data communications network 7 can also be used by a point of access 25 for accessing a service managed by the service provider 20, which is referenced hereinafter as the retailer point and can be used by a user who is registered in the database 11 in order to access a service in which he is interested.

Finally, the figure illustrates a mobile telephone 40, this expression being used to designate any device capable of connecting to the mobile telephone network 8, whose mobile telephone number is in turn registered in the database 11 and is associated with user identification data.

All the elements shown schematically in Figure 1 are shown in this form by way of example and illustrate what can actually be multiple servers 10, 20 and 30, multiple retailer points 25, and multiple mobile telephones 40.

Likewise, the data communications networks 5, 6 and 7 can coincide with a same data communications network or can comprise multiple data communications networks even of different kinds, so long as they can be interfaced with the certifier 10 and, if necessary, with each other by way of suitable gateways, as is well known in the background art. Likewise, the mobile telephone network 8 references the various mobile telephone networks owned by various telephone carriers, regardless of the type and of the communications protocols used. Typically, said network is a network of the GSM type, but it can also be of the GPRS, UMTS or TACS or other type of network used internationally.

In the description that follows, the terms certifier, service provider, mobile telephone carrier and retailer point are used equally to identify both the generic party and the technical means operated by that party, such as the servers of the certifier, of the service provider, of the mobile telephone carrier or the client devices of the retailer point.

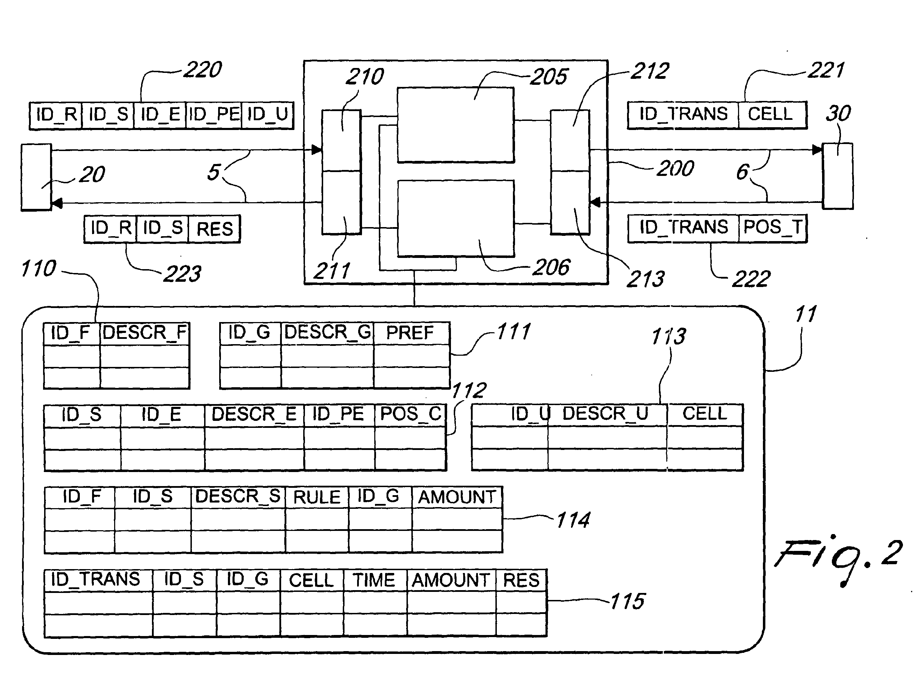

The core of the system according to the present invention is shown schematically in Figure 2, which illustrates the base modules of a device that provides the inventive concept on which the invention is based, an example of structure of the database 11 and of messages exchanged between the certifier 10 and the service provider 20 and the mobile telephone carrier 30. In greater detail, Figure 2 illustrates a security device 200, preferably provided as software, which comprises means 210 for receiving data that arrives from the service provider over the data communications network 5 and means 211 for sending data to the service provider 20 over the same data communications network, means 212 for sending data to the mobile telephone carrier via the data communications network 6, and means 213 for receiving data from the mobile telephone carrier over the same data communications network, means 205 for the preliminary operations to be performed on the database 11 in order to retrieve the data required for cross-checking, for example the required service, the geographic location of the access point 25, the mobile telephone number of the user, the mobile telephone carrier that owns said mobile telephone number, and finally means 206 for comparing data that identify two geographic locations and for generating a result on the basis of a rule of comparison.

Figure 2 also shows, again by way of example, the structures of some information packets 220, 221, 222 and 223 exchanged among the various parties.

The operation of the system according to the invention is divided into two logic steps: a step for registration of the service providers 20, of the mobile telephone carriers 30 and of the users of both services offered by a provider 20 and by a carrier 30 in the database 11 of the certifier 10, and a step for actual use of the cross-checking system according to the invention.

The first step is performed in particular when a new service provider 20 intends to register one of his services with the certifier 10 or when a new mobile telephone carrier 30 joins the system and is also registered in the database 11 of the certifier 10.

In both cases, as in the case of modification of the data related to one of the parties involved, the certifier 10 updates his database 11, entering or updating the identification data for each party. In particular, the FORNITORI table 110 contains the data related to an identifier ID_F assigned to the provider and data DESCR_F that describe said provider, while the table 111 contains the data related to an identifier ID_G assigned to the mobile telephone carrier and data DESCR_G that describe said carrier. The table preferably also contains a PREF field that identifies the telephone prefix numbers associated with the carrier, whereby it is therefore possible to determine, from a telephone number, the telephone carrier 30 associated with that number.

The subtable 112, for each provider of the service, contains the data related to the participating retailer, to the specific point and to its geographic location, verified with the specific telephone carrier.

The subtable 113 contains, for each user registered by the service provider, his identification data ID_U and an optional description DESCR_U, the telephone number of his mobile telephone CELL and optionally the corresponding telephone carrier 30. Alternatively, as mentioned, the telephone carrier 30 can be identified on the basis of the prefix of the telephone number.

The table 114 stores the various services that are managed, which are identified by means of a code ID_S and are accompanied by descriptive data DESCR_S and by the owning provider code ID_F. The table also contains two other fields: the carrier identifier ID_G and the field RULE, which optionally determines a specific rule or comparison parameters to be used for comparison between geographic locations depending on the carrier involved, as will become better apparent hereinafter. Further supporting fields, designated by AMOUNT, allow to set optional parameters for automatic cost calculation.

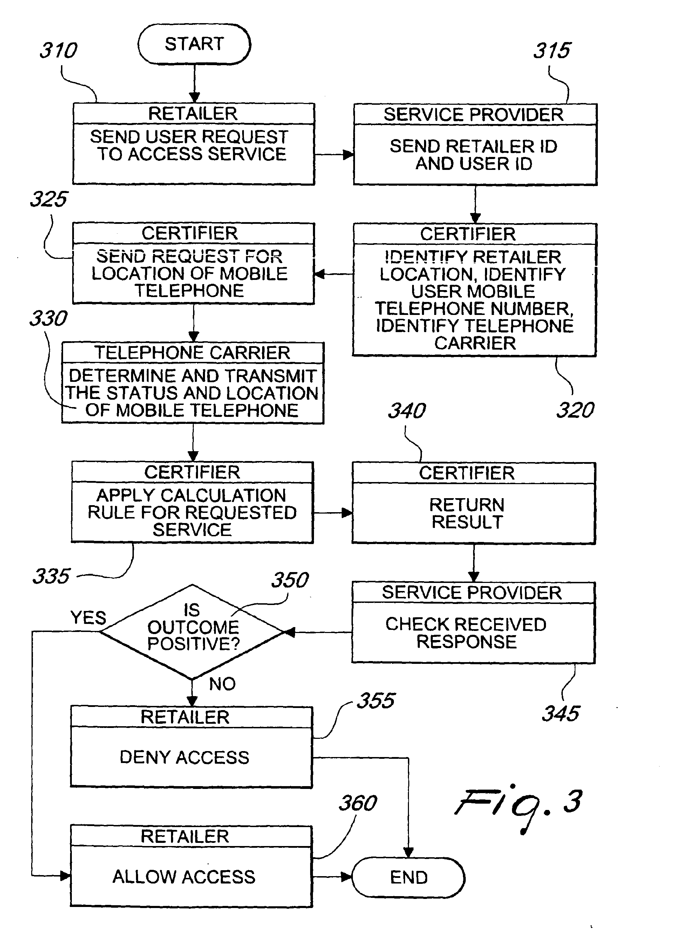

With reference to the flowchart of Figure 3, the operation of the system in the step for actual access to a service provided by a provider affiliated with the certifier 10 is as follows.

At the step 310, a user connects from a retailer point 25 for accessing the service provider 20, sending in a conventional manner, as regards that service, a request to access the service that includes user identification data.

In the step 315, the service provider 20 sends to the certifier 10 an information packet 220 that comprises both user identification data and identification data of the retailer point 25.

Typically, the database 11 contains a first table that stores the identifier of each service managed by the service provider and a list of the retailer points that can be used to access the service. In particular, each one of said user points must have one or more data items that allow to identify its geographic location with sufficient precision. These data can be, for example, the latitude and longitude coordinates of the retailer point. The database 11 conventionally stores an identifier for each registered user, and said identifier can be provided in nominative form, i.e., by giving the personal data of each user and associating a name with them, or even anonymously, i.e., by entering in the database an identification number of a card, a code or another identification means. The user identification data are furthermore connected to a third table together with one or more mobile telephone numbers, implicitly paired, by means of the prefix of the telephone number, with a different mobile telephone carrier.

The data conventionally received from the service provider 20 are then used in the system of the certifier 10 to identify both a first mobile telephone number associated with the user and the geographic location of the retailer point used by the user to access the service. The provider then sends to the certifier 10 an information data packet 220 that contains a request identifier ID_R, the service identifier ID_S, the retailer identifier ID_E, the identifier ID_PE of the retailer point 25 used to access the service, and a unique user identification data item ID_U.

In the step 320, the device 200 that operates on the server of the certifier 10 receives the packet by virtue of the receiver means 210 and passes it to the means 205. The means 205 check for the presence, in the table 110, of the identification code of the provider of the service ID_S, check in the subtable 112 the geographic location POS_C of the retailer point identified by ID_PE, determine the telephone carrier involved by means of the prefix of the received mobile telephone number by checking for its presence in the table 113, and enter in the table 114 a new record, which includes a unique code ID_TRANS that identifies the operation in progress, the code of the service ID_S, the code of the telephone carrier ID_G, and the mobile telephone number CELL. A packet 221 that contains the identification code ID_TRANS and the mobile telephone number CELL is then sent, at the step 325, via the transmission means 212 to the telephone carrier 30, which has the task of returning an information packet 222 that contains the identification code ID_TRANS and data related to the geographic location POS_T of the mobile telephone that corresponds to the mobile telephone number being considered (step 330). The position is calculated according to known methods by using the wave cones that determine the area coverage of a mobile telephone network.

In the step 335, once these data have been received via the receiver interface 213, the comparison means 206 use the received ID_TRANS code to retrieve in the table 113 the identification data of the service ID_S and of the carrier ID_G and determine, by reading the table 114, whether there is a particular rule RULE to be applied in order to calculate the result of the comparison between the point POS_T and the point POS_C, received from the table 112. For example, the rule RULE can identify the interval within which the points POS_T and POS_C must be considered identical. The row ID_TRANS in table 115 is then completed by entering a time stamp TIME that comprises the year, month, day, hour, minute and second of the transaction, the result RES and one or more amounts AMOUNT, which indicate or are used to calculate costs/revenue in general.

In the step 340, if there is a location match within the applied limits, the means 206 return to the service provider 20 a packet 223 that comprises data sufficient to identify the request ID_R to which the packet refers, the service ID_S and the positive outcome of the result RES. In the other case, a negative outcome code is returned. Before ending with a negative outcome, if the user has multiple telephone numbers, the system can repeat the cross-checking request by using the successive telephone numbers CELL of the user ID_U.

In the step 345, the service provider receives the outcome of the operation and, in the step 350, manages the received result. The service provider can decide autonomously, in this case, the procedure to be followed in order to authorize access to the service or not (steps 355, 360).

By way of non-limitative illustration, some examples of use of the inventive concept on which the present invention is based are now described; in said examples, a service provided over a data communications network 7 uses the cross-check derived from the detection of the location of a mobile telephone 40 assigned to the user in order to perform an automatic cross-check to support the authenticity of the identity of said user.

In a first example, the system according to the present invention is used to verify the identity of a user in the context of financial transactions on credit card circuits.

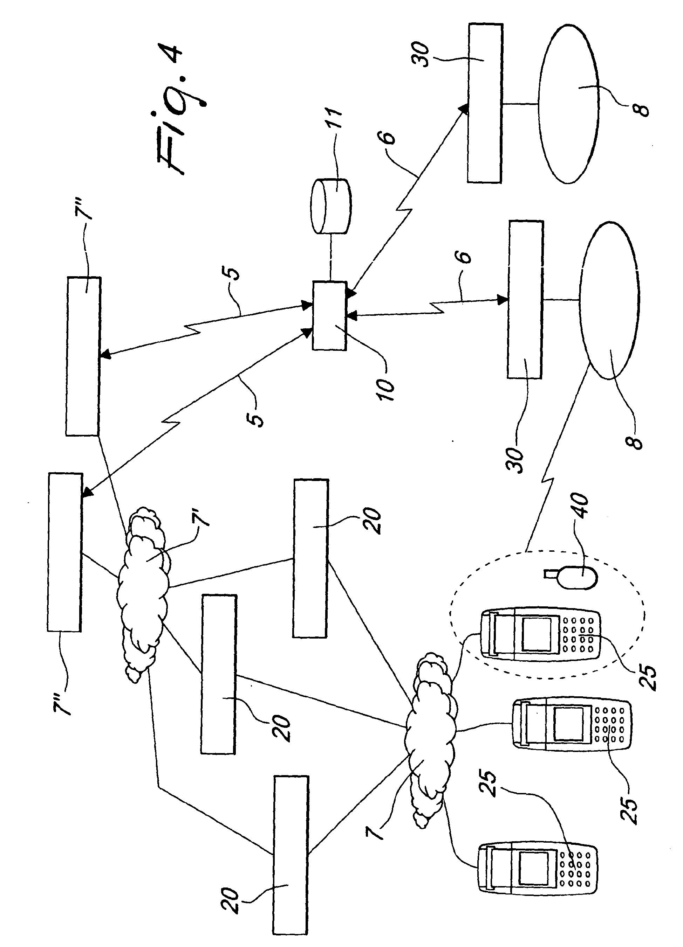

The architecture of this specific system is shown in greater detail in Figure 4, which shows, next to the elements already identified with reference to Figure 1, the data communications network 7 exploded into the various networks 7' and 7" that identify the data communications networks for connection among the retailer points 25, the service providers 20, for example national banks, data communications networks 7' for connection to the international circuits 7".

The user goes to a point 25 of a retailer, this term being used to designate a party that is affiliated with the financial company and accepts the card as a means of payment that is alternative to cash, or also an ATM, for example a Bancomat cashpoint, from which cash can be drawn.

The request to authorize the transaction, which includes the identification data of the card and of said retailer 25, is sent by the retailer 25 to the financial company that operates the card used by the user; said financial company in turn sends a verification request to the certifier 10 over the data communications network 5. The certifier 10, after receiving the request, identifies the location of the retailer 25 and, on the basis of the telephone number, the mobile telephone carrier 30 involved in the manners already described sends the received telephone number and waits for the current location detected by the telephone carrier as a reply.

If the mobile telephone 40 is switched off, the certifier sends the corresponding code to the financial company, which accordingly manages the situation according to its specific methods, for example by reporting to the retailer that it is not possible to perform the transaction or by requesting the verification of a document on the part of the retailer in the case of a purchase operation performed with the customer present. In the simplest case, the clearance for the transaction is instead denied.

If the reply of the mobile telephone carrier instead identifies correctly the position of the mobile telephone of the user, the verification system of the certifier 10 checks whether said location coincides, within the set tolerance limits, with the position of the retailer, and returns the outcome to the financial company. In turn, the financial company authorizes or declines the transaction.

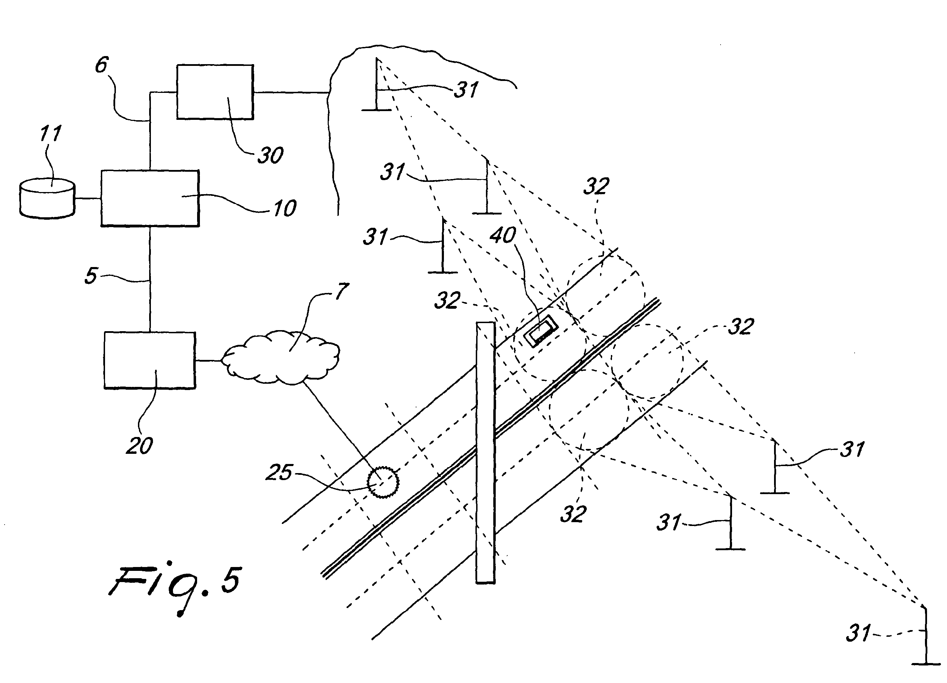

A second example of use of the system according to the present invention relates to the problem of highway safety and is now described with reference to Figure 5. In this case, the primary data communications network is constituted by the highway data communications network, which is used by highway management companies to exchange of information related to the services already offered, particularly the service known as Telepass and used on Italian highways.

The highway management company divides the various highways for each direction of travel into multiple segments of suitable dimensions.

Each telephone carrier interested in the service provides the geographic location for each individual segment defined by the highway management company, covering it with a cone 32 by means of relay stations 31 located at suitable distances for coverage according to the intended granularity.

The certifier 10 stores the highway segments with the corresponding geographic locations for each individual telephone carrier.

The service provider 20, in this case the highway management company, detects the entry in a given highway segment of a user of a vehicle provided with a Telepass and reports to the certifier 10 the identification number of that user. The certifier extracts the corresponding mobile telephone number of the user and stores it in a table of users that have entered the same highway and in the same direction, from which the registered mobile telephone number is removed after an additional report on the part of the highway management company that the vehicle has crossed a highway exit gate.

When the highway management company identifies a dangerous condition on a highway section 25, which can be fully likened to a retailer point, the company sends a signal to the certifier 10, which asks the respective telephone carrier 30 for the location of the mobile telephone 40 that corresponds to each number entered in the dedicated table that corresponds to the service code received on the part of the highway management company. If the computing system of the certifier verifies that the location of the mobile telephone is critical with respect to the location of the risk situation, the system of the certifier 10 sends directly to each registered number an SMS that warns the user of the abnormal situation on the segment on which he is about to travel.

In order to optimize the efficiency of the system, each mobile telephone 40 can be set with a suitable alarm ringer that calls the user's attention to the SMS message, which can contain a brief indication of the identified risk situation, for example, the indication of fog banks or slow traffic. To avoid distracting the user's attention, particularly if he is the only person on board the vehicle, it is also possible to install a suitable device 600, shown in Figure 6 and provided with an antenna 604, on which a different telephone card or a copy of the telephone card of the user is installed, said card being dedicated to receiving signals on the part of the highway management company or of the certifier 10.

In this manner, each message sent to the telephone number of that card can include an identifier of a prerecorded voice message that activates the playback of one or more sentences that report vocally the risk situation by means of the loudspeaker 601. In addition to this, the device can comprise danger indication LEDs 602 and one or more buttons 603 that the user can use to send a corresponding danger message to a preset telephone number that can be optionally modified remotely and corresponds to a receiver operated by the highway management company. In this case, the highway management company sends a message to the certifier 10, which comprises the identifier of the mobile telephone that has sent the message, in response to which the certifier 10 sends a request to the telephone carrier 30 and forwards the information to the highway management company, which can thus use these data to integrate its own systems for verifying traffic and road conditions.

Of course, in order to reduce the number of messages sent to the users traveling toward the location 25, it is possible to integrate the described method by applying known preprocessing techniques, for example by not sending the danger message to users who cannot be reasonably in the vicinity of the location, by means of simple calculations based on the space/time relation and on the maximum speed of a motor vehicle.

In a third example of a system that operates according to the inventive concept on which the present invention is based, the service registered with the certifier relates to an alarm system, for example for home or industrial use.

When the user operates the activation device, but most of all the deactivation device, of an alarm system, for example by operating a remote control or wall-mounted keypad, the alarm device, conveniently connected to a control center of the service provider over a wired or wireless data communications network, sends the alarm activation or deactivation request together with a code that identifies the alarm system and the prewired identity of the person authorized to operate the device.

In this case also, the service provider sends the identification number to the certifier, which extracts the location of the alarm system and retrieves, at the received identification code, the mobile telephone number, whose location must match the location of the alarm system. As in the preceding case, these data are sent to the certifier 10, which by performing the same operations described above can return to the service provider the outcome of the check and authorize or deny the operation for alarm activation or deactivation.

It has thus been shown that the described method and system achieve the intended aim and objects. In particular, it has been shown that the system thus conceived allows to integrate and centralize the operations for verifying the identity of users during sensitive actions regardless of the service required, increasing the degree of security by virtue of a cross-check that utilizes resources that are already available to the average user.

Clearly, numerous modifications are evident and can be performed promptly by the person skilled in the art without abandoning the scope of the protection of the present invention. For example, it is obvious for the person skilled in the art to conceive systems for retrieving the information required for cross-checking that are provided by placing the data in various databases or by centralizing their location on any point of a data communications network that can be accessed by the certifier, and it is also evident that communication among the described parties can occur by utilizing any kind of known communications protocol.

It is also evident that the inventive concept on which the present invention is based is independent of physical location and of the manner in which user identification data is processed, being optionally different from the cited match-up mechanism managed by the service provider.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A security system for cross-checking over data communication networks, comprising:
- a plurality of service providers (20);
- at least one international circuit (7");
- a plurality of mobile telephone carriers (30);
- one certifier (10);
- at least one data communication network (5, 6, 7) interconnecting said certifier (10), said plurality of service providers (20), said plurality of mobile telephone carriers (30) and said international circuit (7") and being connected to a plurality of points of access (25) for accessing to the services offered by the plurality of service providers (20) and the at least one international circuit (7");
- said certifier (10), comprising:
- means for receiving from any one of the service providers identification data of a user of a service offered by such service provider (20, 7") and identification data of a point of access (25) to this service;
- means for identifying the geographic location of the point of access (25) and a mobile telephone number associated with the user of this service;
- means for determining, among said plurality of mobile telephone carriers, the mobile telephone carrier associated with said mobile telephone number;
- means for sending the mobile telephone number to the determined mobile telephone carrier (30);
- means for receiving from said at least one the mobile telephone carrier (30) data that identify the geographic location of a mobile telephone corresponding to the sent mobile telephone number;
- computing means for generating and sending a result of a comparison between the geographic location of the point of access to a service and the geographic location of a mobile telephone utilised by the user of said service.

2. The security system according to claim 1, **characterised in that** said data communications networks are chosen from the group that comprises:
- credit card circuit networks,
- debit card circuit networks,
- fixed and mobile telephone networks,
- Internet and Intranet networks,
- highway data communications networks,
- private networks.

3. The security system according to claim 2, **characterised in that** it further comprises means for sending the result to the service provider (2).

4. The security system according to claim 3, **characterised in that** said service provider (20) is a debit or credit card issuer.

5. The security system according to claim 3, **characterised in that** said service provider (20) is an alarm system operator.

6. The security system according to claim 2, **characterised in that** it further comprises means for sending data, as a function of the result, to the mobile telephone number.

7. The security system according to claim 6, **characterised in that** said service provider (20) is a highway management company.

8. A method for cross-checking over data communications networks, comprising the steps that consist in:
a) receiving from any one of a plurality of service providers (20) identification data of a user of a service offered by the service provider (20) and identification data of a point of access (25) of a plurality of points of access (25), said data both originated from said point of access (25) to said service;
b) identifying said user and said point of access (25) to said service;
c) identifying the geographic location of said point of access (25) and at least one mobile telephone number associated with said user;
d) determining, among a plurality of mobile telephone carriers, the mobile telephone carrier associated with said at least one mobile telephone number;
e) sending (325) said at least one mobile telephone number to the mobile telephone carrier (30) determined at step d);
f) receiving from the telephone carrier (30) data that identify the geographic location of at least one mobile telephone (40) corresponding to the sent at least one mobile telephone number;
g) generating (335) and sending (340) at least one result of a comparison between the geographic location of said service access point (25) and the geographic location of the at least one mobile telephone (40).

9. The method according to claim 8, **characterised in that** said data communications networks are selected from the group that comprises:
- credit card circuit networks,
- debit card circuit networks,
- fixed and mobile telephone networks,
- Internet and Intranet networks,
- highway data communications networks,
- private networks.

10. The method according to claim 9, **characterised in that** it further comprises the step of sending the result to the service provider.

11. The method according to claim 10, **characterised in that** said service provider is a debit or credit card issuer.

12. The method according to claim 10, **characterised in that** said service provider is an alarm system operator.

13. The method according to claim 9, **characterised in that** it further comprises the step of sending data, as a function of the result, to the mobile telephone number.

14. The method according to claim 13, **characterised in that** said service provider is a highway management company.

## Patentansprüche

1. Ein Sicherheitssystem zur Kreuzsicherung über Datenkommunikationsnetze, das Folgendes umfasst:
- eine Vielzahl von Diensteanbietern (20),
- mindestens eine Auslandsleitung (7"),
- eine Vielzahl von Mobiltelefon-Trägern (30),
- einen Zertifizierer (10),
- mindestens ein Datenkommunikationsnetz (5, 6, 7), das den Zertifizierer (10), die Vielzahl von Diensteanbietern (20), die Vielzahl von Mobiltelefon-Trägern (30) und die Auslandsleitung (7") miteinander verbindet und mit einer Vielzahl von Zugriffspunkten (25) für den Zugriff auf die Dienste verbunden ist, die von der Vielzahl von Diensteanbietern (20) angeboten werden und von der mindestens einen Auslandsleitung (7"),
- wobei der Zertifizierer (10) Folgendes umfasst:
- Mittel zum Empfangen, von irgendeinem der Diensteanbieter, von Identifikationsdaten eines Benutzers eines Dienstes, der von einem solchen Diensteanbieter (20, 7") angeboten wird, und Identifikationsdaten eines Zugriffspunkts (25) für diesen Dienst,
- Mittel zur Identifikation der geographischen Position des Zugriffspunkts (25) und einer Mobiltelefonnummer, die mit dem Benutzer dieses Dienstes verknüpft ist,
- Mittel zur Bestimmung, aus der Vielzahl von Mobiltelefon-Trägern, des Mobiltelefon-Trägers, der mit der Mobiltelefonnummer verknüpft ist,
- Mittel zum Senden der Mobiltelefonnummer an den ermittelten Mobiltelefon-Träger (30),
- Mittel, um von dem mindestens einen Mobiltelefon-Träger (30) Daten zu empfangen, welche die geographische Position eines Mobiltelefons bestimmen, das der gesendeten Mobiltelefonnummer entspricht,
- Berechnungsmittel zum Erzeugen und Senden eines Ergebnisses eines Vergleichs zwischen der geographischen Position des Zugriffspunkts für einen Dienst und der geographischen Position eines Mobiltelefons, das von dem Benutzer des Dienstes verwendet wird.

2. Das Sicherheitssystem gemäß Anspruch 1, **dadurch gekennzeichnet, dass** die Datenkommunikationsnetze aus der Gruppe gewählt sind, die Folgendes umfasst:
- Kreditkarten-Vermittlungsnetze,
- Guthabenkarten-Vermittlungsnetze,
- Fest- und Mobiltelefonnetze,
- Internet- und Intranet-Netze,
- Autobahn-Datenkommunikationsnetze,
- Privatnetze.

3. Das Sicherheitssystem gemäß Anspruch 2, **dadurch gekennzeichnet, dass** es weiter Mittel umfasst, um das Ergebnis an den Diensteanbieter (2) zu senden.

4. Das Sicherheitssystem gemäß Anspruch 3, **dadurch gekennzeichnet, dass** der Diensteanbieter (20) ein Aussteller von Guthaben- oder Kreditkarten ist.

5. Das Sicherheitssystem gemäß Anspruch 3, **dadurch gekennzeichnet, dass** der Diensteanbieter (20) ein Alarmsystem-Betreiber ist.

6. Das Sicherheitssystem gemäß Anspruch 2, **dadurch gekennzeichnet, dass** es weiter Mittel umfasst, um Daten, abhängig von dem Ergebnis, an die Mobiltelefonnummer zu senden.

7. Das Sicherheitssystem gemäß Anspruch 6, **dadurch gekennzeichnet, dass** der Diensteanbieter (20) eine Autobahn-Verwaltungsfirma ist.

8. Ein Verfahren zur Kreuzsicherung über Datenkommunikationsnetze, das folgende Schritte umfasst:
a) Empfangen, von irgendeinem aus einer Vielzahl von Diensteanbietern (20), von Identifikationsdaten eines Benutzers eines Dienstes, der von dem Diensteanbieter (20) angeboten wird, und von Identifikationsdaten eines Zugriffspunkts (25) aus einer Vielzahl von Zugriffspunkten (25), wobei beide Daten von dem Zugriffspunkt (25) für den Dienst stammen,
b) Identifikation des Benutzers und des Zugriffspunkts (25) für den Dienst,
c) Identifikation der geographischen Position des Zugriffspunkts (25) und mindestens einer Mobiltelefonnummer, die zu dem Benutzer gehört,
d) Bestimmung, aus einer Vielzahl von Mobiltelefon-Trägern, des Mobiltelefon-Trägers, der mit dem mindestens einen Mobiltelefonnummer verknüpft ist,
e) Senden (325) der mindestens einen Mobiltelefonnummer an den in Schritt d) ermittelten Mobiltelefon-Träger (30),
f) Empfangen, von dem Telefon-Träger (30), von Daten, welche die geographische Position mindestens eines Mobiltelefons (40) angeben, das der gesendeten mindestens einen Mobiltelefonnummer entspricht,
g) Erzeugen (335) und Senden (340) mindestens eines Ergebnisses eines Vergleichs zwischen der geographischen Position des Dienst-Zugriffspunkts (25) und der geographischen Position des mindestens einen Mobiltelefons (40).

9. Das Verfahren gemäß Anspruch 8, **dadurch gekennzeichnet, dass** die Datenkommunikationsnetze aus der Gruppe gewählt sind, die Folgendes umfasst:
- Kreditkarten-Vermittlungsnetze,
- Guthabenkarten-Vermittlungsnetze,
- Fest- und Mobiltelefonnetze,
- Internet- und Intranet-Netze,
- Autobahn-Datenkommunikationsnetze,
- Privatnetze.

10. Das Verfahren gemäß Anspruch 9, **dadurch gekennzeichnet, dass** es weiter den Schritt des Sendens des Ergebnisses an den Diensteanbieter umfasst.

11. Das Verfahren gemäß Anspruch 10, **dadurch gekennzeichnet, dass** der Diensteanbieter ein Aussteller von Guthaben- oder Kreditkarten ist.

12. Das Verfahren gemäß Anspruch 10, **dadurch gekennzeichnet, dass** der Diensteanbieter ein Alarmsystem-Betreiber ist.

13. Das Verfahren gemäß Anspruch 9, **dadurch gekennzeichnet, dass** es weiter den Schritt des Sendens von Daten, abhängig von dem Ergebnis, an die Mobiltelefonnummer umfasst.

14. Das Verfahren gemäß Anspruch 13, **dadurch gekennzeichnet, dass** der Diensteanbieter eine Autobahn-Verwaltungsfirma ist.

## Revendications

1. Système de sécurité pour le contrôle croisé de réseaux télématiques, comprenant:
- une pluralité de fournisseurs de service (20);
- au moins un circuit international (7");
- une pluralité d'opérateurs de téléphone mobile (30);
- un certificateur (10);
- au moins un réseau télématique (5, 6, 7) interconnectant ledit certificateur (10), ladite pluralité de fournisseurs de service (20), ladite pluralité d'opérateurs de téléphone mobile (30) et ledit circuit international (7") et étant connecté à une pluralité de points d'accès (25) pour l'accès aux services offerts pas la pluralité de fournisseurs de service (20) et le au moins un circuit international (7");
- ledit certificateur (10), comprenant:
- des moyens pour recevoir depuis l'un quelconque des fournisseurs de service des données d'identification d'un utilisateur d'un service offert par ce fournisseur de service (20, 7") et la donnée d'identification d'un point d'accès (25) à ce service;
- des moyens pour identifier la localisation géographique du point d'accès (25) et un numéro de téléphone mobile associé à l'utilisateur de se service;
- des moyens pour déterminer, parmi ladite pluralité d'opérateurs de téléphone mobile, l'opérateur de téléphone mobile associé audit numéro de téléphone mobile;
- des moyens pour envoyer le numéro de téléphone mobile à un opérateur de téléphone mobile (30) déterminé;
- des moyens pour recevoir depuis ledit au moins un opérateur de téléphone mobile (30) des données qui identifient la localisation géographique d'un téléphone mobile correspondant au numéro de téléphone mobile envoyé;
- des moyens de calcul pour générer et envoyer un résultat d'une comparaison entre la localisation géographique du point d'accès à un service et la localisation géographique d'un téléphone mobile utilisé par l'utilisateur dudit service.

2. Système de sécurité selon la revendication 1, **caractérisé en ce que** lesdits réseaux télématiques sont choisis dans le groupe qui comprend:
- les réseaux de cartes de crédit,
- les réseaux de cartes de débit,
- les réseaux de téléphone mobile et fixe,
- les réseaux internet et intranet,
- les réseaux télématiques d'autoroute;
- les réseaux privés.

3. Système de sécurité selon la revendication 2, **caractérisé en ce qu'**il comprend en outre des moyens pour envoyer le résultat au fournisseur de service (2).

4. Système de sécurité selon la revendication 3, **caractérisé en ce que** ledit fournisseur de service (20) est un émetteur de carte de crédit ou de débit.

5. Système de sécurité selon la revendication 3, **caractérisé en ce que** ledit fournisseur de service (20) est un opérateur de système d'alarme.

6. Système de sécurité selon la revendication 2, **caractérisé en ce qu'**il comprend en outre des moyens pour envoyer des données, comme fonction de résultat, au numéro de téléphone mobile.

7. Système de sécurité selon la revendication 6, **caractérisé en ce que** ledit fournisseur de service (20) est une compagnie de gestion d'autoroute.

8. Procédé pour le contrôle croisé de réseaux télématiques, comprenant les étapes consistant à:
a) recevoir de l'un quelconque parmi une pluralité de fournisseurs de service (20) des données d'identification d'un utilisateur d'un service offert par le fournisseur de service (20) et des données d'identification d'un point d'accès (25) d'une pluralité de points d'accès (25), lesdites données partant toutes les deux dudit point d'accès d'un accès (25) audit service;
b) identifier ledit utilisateur et ledit point d'accès (25) audit service;
c) identifier la localisation géographique dudit point d'accès (25) et au moins un numéro de téléphone mobile associé audit utilisateur;
d) déterminer, parmi une pluralité d'opérateurs de téléphone mobile, l'opérateur de téléphone mobile associé audit au moins un numéro de téléphone mobile;
e) envoyer (325) ledit au moins un numéro de téléphone mobile à l'opérateur de téléphone mobile (30) déterminé à l'étape d);
f) recevoir de l'opérateur de téléphone mobile (30) des données qui identifient la localisation géographique d'au moins un téléphone mobile (40) correspondant à au moins un numéro de téléphone mobile envoyé;
g) générer (335) et envoyer (340) au moins un résultat d'une comparaison entre la localisation géographique dudit point d'accès au service (25) et la localisation géographique dudit au moins un téléphone mobile (40).

9. Procédé selon la revendication 8, **caractérisé en ce que** lesdits réseaux télématiques sont choisis parmi le groupe qui comprend:
- les réseaux de cartes de crédit,
- les réseaux de cartes de débit,
- les réseaux de téléphone mobile et fixe,
- les réseaux internet et intranet,
- les réseaux télématiques d'autoroute;
- les réseaux privés.

10. Procédé selon la revendication 9, **caractérisé en ce qu'**il comprend en outre l'étape consistant à envoyer le résultat au fournisseur de service.

11. Procédé selon la revendication 10, **caractérisé en ce que** ledit fournisseur de service est un émetteur de carte de crédit ou de débit.

12. Procédé selon la revendication 10, **caractérisé en ce que** ledit fournisseur de service est un opérateur de système d'alarme.

13. Procédé selon la revendication 9, **caractérisé en ce qu'**il comprend en outre l'étape consistant à envoyer des données, comme fonction de résultat, au numéro de téléphone mobile.

14. Procédé selon la revendication 13, **caractérisé en ce que** ledit fournisseur de service est une compagnie de gestion d'autoroute.
